# EUROPÄISCHE PATENTSCHRIFT

(11) **EP 0 696 471 B1**
(45) Veröffentlichungstag und Bekanntmachung des Hinweises auf die Patenterteilung: **17.02.1999**
(21) Anmeldenummer: 95810477.0
(22) Anmeldetag: 24.07.1995
(51) Int. Cl.: B01J 2/16, B01J 8/24, B01J 19/00

(54) **Verfahren und Einrichtung zum Bewegen eines teilchenförmigen Gutes**
Process and device for moving particulate material
Procédé et installation pour déplacer des matériaux particulaires

(30) Priorität: 11.08.1994 CH 2482/94
(43) Veröffentlichungstag der Anmeldung: 14.02.1996
(73) Patentinhaber: Glatt Maschinen- und Apparatebau AG, CH-4133 Pratteln (CH)
(72) Erfinder: Boos, Günther, D-79713 Bad Säckingen (DE); Doetsch, Winfried, Dr., CH-4133 Pratteln (CH); Donnerhack, Lutz, CH-4053 Basel (CH); Hungerbach, Wolfgang, D-79379 Müllheim (DE); Tondar, Matthias, D-78966 Hausen i. W. (DE)
(74) Vertreter: Eder, Carl E.

(56) Entgegenhaltungen:
- WO-A-93/25303
- DE-A- 3 237 303
- FR-A- 2 475 928

## Beschreibung

Die Erfindung betrifft ein Verfahren und eine Einrichtung zum Bewegen, insbesondere Verwirbeln, eines teilchenförmigen Gutes gemäss dem Oberbegriff des Anspruchs 1 bzw. gemäss dem Oberbegriff des Anspruchs 5.

Das teilchenförmige Gut kann beim Bewegen behandelt, zum Beispiel getrocknet werden. Die Teilchen des Gutes können jedoch beim Bewegen zuerst durch Besprühen mit mindestens einem Sprühmaterial agglomeriert sowie durch Aufbaugranulation granuliert und/oder mit Überzügen versehen und danach ohne Besprühung getrocknet werden.

Das Verfahren und die Einrichtung dienen zum Bewegen eines teilchenförmigen Gutes, das brennbaren Staub aufweist oder bei dessen Bewegung und Behandlung brennbarer Staub entstehen kann. Unter Staub wird hier ein teilchenförmiges Material verstanden, dessen Teilchen Durchmesser von höchstens ungefähr 0,5 mm haben und das zusammen mit Luft ein explosionsfähiges Gemisch bilden kann. Das Verfahren und die Einrichtung können zum Beispiel zum Bewegen und Behandeln eines aus Staub bestehenden Gutes dienen. Das Verfahren und die Einrichtung können jedoch auch zum Bewegen und Behandeln eines Gutes dienen, das aus Teilchen besteht, die grösser als 0,5 mm sind, aus denen jedoch beim Bewegen durch Abrieb explosionsfähiger Staub entstehen kann. Ferner kann eventuell ein aus Staub bestehendes oder Staub enthaltendes Sprühmaterial auf relativ grosse Teilchen eines teilchenförmigen Gutes aufgesprüht werden.

Wenn Luft durch den brennbaren Staub hindurchströmt, kann ein explosionsfähiges Staub/Luft-Gas-Gemisch entstehen, das durch eine Entzündung zur Explosion gebracht werden kann. Eine Explosionsgefahr besteht besonders dann, wenn mindestens 50 Gewichtsprozent der Staubteilchen einen Durchmesser von weniger als 0,07 mm haben und also der Medianwert der Teilchendurchmesser weniger als 0,07 mm beträgt.

Hier sollen noch die Begriffe "explosionsfest", "explosionsdruckfest" und "explosionsdruckstossfest" erläutert werden. Explosionsfest gebaute Behälter, Leitungen und sonstige Einrichtungsteile, in denen mit dem Auftreten von Explosionen zu rechnen ist, können explosionsdruckfest oder explosionsdruckstossfest sein. Explosionsdruckfeste Einrichtungsteile sind derart gebaut, dass sie dem Druck einer Explosion ohne bleibende Verformung oder sonstige Schäden standhalten. Bei explosionsdruckstossfesten Einrichtungsteilen sind hingegen bleibende Verformungen zulässig. Die explosionsdruckstossfesten Einrichtungsteile dürfen aber nicht aufreissen. Für weitere Einzelheiten sei auf die VDI-Richtlinien 2263 und insbesondere das Folgeblatt 3 zu diesen Richtlinien verwiesen.

Bekannte Wirbelschicht-Einrichtungen zum Bewegen und Behandeln eines mindestens zum Teil staubförmigen Gutes weisen einen Gut- und/oder Wirbelschicht-Behälter auf, der im unteren Teil einen Siebboden und oberhalb von diesem ein erstes Filter enthält, das einen zwischen ihm und dem Siebboden vorhandenen, ersten, unteren Innenraumbereich (Wirbelbett-Kammer) gegen einen zweiten, oberen Innenraumbereich (Reinluftseite des ersten Filters) des Behälters abgrenzt. Der zuletzt genannte Innenraumbereich ist über eine Verbindungsleitung aufweisende Verbindungsmittel mit einem Gehäuse eines Nachentstaubers verbunden, das ein anderes, zweites Filter enthält. Der Nachentstauber hat einen Auslass, der über ein Gebläse mit der Umgebung verbunden ist. Das erste Filter besitzt normalerweise mindestens einen Halter und mindestens ein von diesem gehaltenes, Zotten aufweisendes, waschbares Filtergewebe.

Beim Betrieb einer solchen Einrichtung hält das erste Filter im Idealfall allen im ersten, unteren Innenraumbereich des Behälters vorhandenen Staub zurück. Wenn beim Betrieb Staubteilchen entstehen, die kleiner als vorgesehen und kleiner als die Durchlassöffnungen des ersten Filters sind, und/oder wenn das letztere schadhaft ist, kann jedoch unter Umständen Staub durch das erste Filter hindurchgelangen. Solcher Staub wird dann von dem zum Nachentstauber gehörenden, zweiten Filter aus dem Gas ausgeschieden.

Hierzu ist anzumerken, dass das Filtergewebe eines ersten Filters üblicherweise von Zeit zu Zeit vorübergehend aus dem Behälter herausgenommen und gewaschen wird und dass dabei eine gewisse Gefahr besteht, dass Risse im Filtergewebe entstehen. Diese Gefahr besteht insbesondere in Fällen, in denen ein Filtergewebe einer Anzahl von Waschvorgängen unterzogen wird, welche die vom Hersteller des Filters und/oder der Einrichtung vorgesehene, maximale Anzahl von Waschvorgängen übersteigt.

Wenn ein teilchenförmiges Gut, das mindestens zum Teil aus brennbarem Staub besteht oder bei dessen Verwirbelung und Behandlung solcher Staub entsteht, mit Luft im unteren Innenraumbereich eines Behälters verwirbelt wird, entstehen in diesem erfahrungsgemäss explosionsfähige Staub/Luft-Gemische. Falls ein solches Gemisch unbeabsichtigt durch eine betriebliche Zündquelle entzündet wird, kommt es im ersten, unteren Innenraumbereich zu einer Explosion. Der dabei entstehende Druckstoss breitet sich dann auch in den zweiten, sich oberhalb des ersten Filters befindenden Innenraumbereich des Behälters, in die diesen mit dem Nachentstauber verbindende Leitung und in den Nachentstauber aus. Um zu verhindern, dass Gut, Flammen und Explosionsdruckstösse in die Umgebung gelangen, ist vor dem Lufteinlass des Gut- bzw. Wirbelschicht-Behälters und in der Leitung zwischen dem Nachentstauber und dem Gebläse ein Schnellschluss-Absperrorgan - z.B. in Form eines Ventils oder Schiebers - angeordnet. Im Falle einer Explosion werden diese Absperrorgane über einen an geeigneter Stelle angebrachten optischen oder auf Druck ansprechenden Detektor aktiviert und geschlossen.

Experimentelle Untersuchungen haben gezeigt, dass vor einer Explosion im ersten Filter (Maschenweite kleiner als der erwartete Teilchendurchmesser des Feinstaubes) vorhandene Beschädigungen oder Risse zur Folge haben können, dass die bei einer Explosion entstehenden Drücke in der gesamten Einrichtung und - also insbesondere im ersten, unteren Innenraumbereich, im zweiten, oberen Innenraumbereich, in der Verbindungsleitung und im Nachentstauber-Gehäuse - wesentlich grösser sind, als die Drücke, die bei einer Explosion entstehen, wenn das erste Filter vor der Explosion unbeschädigt ist. Der Gut- und/oder Wirbelschicht-Behälter, die diesen mit dem Nachentstauber verbindenden Verbindungsmittel, der Nachentstauber und sonstige Teile der Einrichtung, die bei einer Explosion mit Druck beaufschlagt werden, müssen daher derart bemessen und gebaut werden, dass sie den bei einer Explosion auftretenden Drücken auch dann standhalten können, wenn das erste Filter vor einer Explosion Staub durchgelassen hat. Die bekannten Einrichtungen haben daher die Nachteile, dass ein möglicher Staubdurchtritt durch das erste Filter die bei einer Explosion entstehenden Drücke sowie Gefahren und die Herstellungskosten für eine explosionsfeste Ausbildung der Einrichtung erhöht. Falls das beim Betrieb der Einrichtung vom ersten Filter zum zweiten Filter strömende Gas soviel Staub enthält, dass das Gas und der Staub zusammen ein explosionsfähiges Gemisch bilden, kann zudem unter Umständen auch in dem sich vom ersten zum zweiten Filter erstreckenden Strömungsweg eine Explosion ausgelöst werden.

Bei anderen bekannten Einrichtungen enthält der Gut-Behälter anstelle eines Siebbodens einen höhenverstellbaren Rotor mit einer Scheibe. Beim Betrieb einer solchen Einrichtung wird der Rotor in eine Stellung gebracht, in der er zusammen mit einem ringförmigen Innenflächenabschnitt eines Teils des Behälters einen Ringspalt begrenzt, durch den Luft in den ersten, unteren Innenraumbereich des Behälters strömt. Ein sich im ersten Innenraumbereich befindendes, teilchenförmiges Gut wird dann teils durch die rotierende Scheibe und teils durch die durch den Ringspalt in den ersten, unteren Innenraumbereich strömende Luft bewegt. Beim Betrieb von derartigen Einrichtungen bestehen bezüglich der Explosionsfestigkeit ähnliche Probleme wie bei den vorher beschriebenen Einrichtungen mit einem Siebboden.

Möglicherweise kann anstelle von Luft ein anderes Gas durch den Behälter und die Filter hindurch geleitet werden, das Sauerstoff aufweist. Dann können sich in bezug auf Staubexplosionen ähnliche Probleme stellen wie bei der Verwendung von Luft.

Der Erfindung liegt die Aufgabe zugrunde, Nachteile der bekannten Verfahren und Einrichtungen zu vermeiden. Dabei soll insbesondere ermöglicht werden, die bei einer allfälligen Staub-Explosion entstehenden Drücke und die Herstellungskosten für eine explosionsfeste, d.h. explosionsdruckfeste oder mindestens explosionsdruckstossfeste Einrichtung möglichst niedrig zu halten. Ferner soll gewährleistet werden, dass in dem vom ersten Filter zum zweiten Filter strömenden, Sauerstoff aufweisenden Gas keine Explosion ausgelöst werden kann.

Diese Aufgabe wird gemäss der Erfindung durch ein Verfahren mit den Merkmalen des Anspruchs 1 und durch eine Einrichtung mit den Merkmalen des Anspruchs 5 gelöst.

Vorteilhafte Weiterbildungen des Verfahrens und der Einrichtung gehen aus den abhängigen Ansprüchen hervor.

Beim erfindungsgemässen Verfahren bzw. beim Betrieb der erfindungsgemässen Einrichtung besteht das zum Bewegen des teilchenförmigen Gutes durch den Behälter hindurch geleitete Gas normalerweise aus Luft. Diese kann zum Beispiel aus der Umgebung über ein Zuluft-Filter in den Behälter hinein und durch diesen sowie durch den Nachentstauber hindurch gesaugt und über das Gebläse wieder an die Umgebung abgegeben werden. Die Luft kann im Behälter und im Nachentstauber Drücke haben, die zum Beispiel ungefähr gleich dem in der Umgebung herrschenden Luftdruck oder kleiner als dieser sind.

Wie schon erwähnt, kann in Sonderfällen eventuell zum Bewegen der Teilchen anstelle von Luft ein anderes, Sauerstoff aufweisendes Gas verwendet werden, wobei der Sauerstoff-Gehalt eines solchen Gases vorzugsweise höchstens 21 Vol.% beträgt. Die vorangehenden und nachfolgenden Angaben über Staub/Luft-Gemische gelten dann in analoger Weise weitgehend auch für Gemische von Staub und anderen sauerstoffhaltigen Gasen.

Die Einrichtung könnte ferner eventuell einen geschlossenen Kreislauf für die Luft oder das anstelle von dieser zum Bewegen des teilchenförmigen Gutes dienenden Gas bilden.

Staub/Luft-Gemische sind nur explosionsfähig, wenn die üblicherweise in Dichteeinheiten - zum Beispiel in Gramm pro Kubikmeter - oder eventuell in Volumenprozent angegebene Staubkonzentration innerhalb eines gewissen Bereichs liegt. Dieser hängt von der Grösse bzw. dem Durchmesser der Staubteilchen, von dem den Staub bildenden Material von der Luftdichte und eventuell auch noch ein wenig von den Formen und Abmessungen der Innenraumbereiche ab, durch welche das Staub/Luft-Gemisch strömt. Wie schon erwähnt, besteht vor allem dann eine grosse Explosionsgefahr, wenn mindestens ein Teil der Staubteilchen, beispielsweise die Hälfte der Staubteilchen oder mehr, einen höchstens etwa 0,07 mm oder sogar höchstens etwa 0,06 mm betragenden Teilchendurchmesser hat.

Wenn das Material - d.h. die chemische Beschaffenheit - des Staubes, die Teilchendurchmesser des Staubes und die Dichte der Luft gegeben sind, besteht insbesondere dann Explosionsgefahr, wenn die Staubkonzentration einen kritischen Wert erreicht oder überschreitet, der in der Fachsprache häufig als untere Explosionsgrenze - abgekürzt UEG - bezeichnet wird. Untersuchungen mit Stäuben aus zahlreichen verschiedenen Materialien mit einem höchstens oder weniger als 0,06 mm betragenden Medianwert der Staubteilchendurchmesser haben ergeben, dass die untere Explosionsgrenze im allgemeinen 15 g/m³ bis 60 g/m³ beträgt. Nötigenfalls kann die untere Explosionsgrenze für einen bestimmten Staub experimentell nach einem definierten Verfahren ermittelt werden.

Beim erfindungsgemässen Verfahren bzw. beim Betrieb der erfindungsgemässen Einrichtung wird die Staubkonzentration in dem vom ersten Filter zum zweiten Filter strömenden, normalerweise aus Luft bestehenden Gas gemessen und das Gebläse ausgeschaltet, wenn die Staubkonzentration mindestens gleich einem vorgegebenen Grenzwert ist, der im folgenden auch als Ausschalt-Grenzwert bezeichnet wird. Dieser kann derart festgelegt werden, dass die Staubkonzentration in der vom ersten zum zweiten Filter strömenden Luft bzw. im sonstigen Gas unter der unteren Explosionsgrenze liegt.

Dadurch wird zunächst sichergestellt, dass in den Teilen der Einrichtung, die den Strömungsweg der Luft bzw. des sonstigen Gases vom ersten Filter zum zweiten Filter begrenzen, nie eine Explosion ausgelöst werden kann. Nun kann zwar trotzdem noch in dem das teilchenförmige Gut enthaltenden, ersten Innenraumbereich des Behälters eine Explosion ausgelöst werden. Bei einer solchen wird meistens das erste Filter beschädigt und durch den Explosionsdruckstoss Staub aus dem ersten Innenraumbereich in den zweiten Innenraumbereich des Behälters und in den Nachentstauber befördert. Die durchgeführten Untersuchungen haben jedoch gezeigt, dass die durch die Explosion im ersten Innenraumbereich und vor allem im zweiten Innenraumbereich, in diesen mit dem Nachentstauber verbindenden Verbindungsmitteln sowie im Nachentstauber erzeugten Drücke auch in einem solchen Fall - d.h. wenn bei der Explosion Staub aus dem ersten Innenraumbereich in den zweiten Innenraumbereich des Behälters und eventuell bis in den Nachentstauber gelangt - wesentlich kleiner bleiben, als wenn bereits vor der Explosion ein explosionsfähiges Staub/Luft-Gemisch in den sich vom ersten zum zweiten Filter erstreckenden Innenraumbereichen vorhanden ist.

In vielen Fällen kann man den Abschalt-Grenzwert der Staubkonzentration auf höchstens 30 g/m³ und zum Beispiel höchstens 5 g/m³ bis höchstens 20 g/m³ festlegen. Ist die untere Explosionsgrenze eines zu verarbeitenden Produktes mit z.B. UEG = 30 g/m³ bekannt, kann der Abschalt-Grenzwert zum Beispiel auf 5 g/m³ bis 20 g/m³ festgelegt werden.

Der Behälter kann durch mindestens eine Leitung aufweisende Verbindungsmittel mit dem Nachentstauber verbunden sein. Der letztere kann ein Gehäuse aufweisen, welches das zweite Filter und einen an dieses angrenzenden Innenraumbereich enthält, in den die mindestens eine Leitung mündet. Da die durch eine allfällige Explosion in einer erfindungsgemässen Einrichtung erzeugten Drücke relativ klein sind, brauchen der Behälter, das Gehäuse des Nachentstaubers und die Verbindungsmittel auch nur bis zu relativ kleinen Drücken explosionsfest, d.h. explosionsdruckstossfest oder - falls gewünscht - explosionsdruckfest zu sein. Dadurch können die Herstellungskosten der Einrichtung entsprechend klein gehalten werden. In vielen Fällen kann es ausreichend sein, den Behälter, die Verbindungsmittel und das Gehäuse bis zu einem Druck explosionsdruckstossfest oder explosionsdruckfest zu machen, der 100 kPa bis 500 kPa und zum Beispiel 150 kPa bis 300 kPa grösser ist als der Luftdruck in der Umgebung.

Falls Staub durch das erste Filter hindurchgelangt und am zweiten Filter ausgeschieden wird, kann am zweiten Filter haftender Staub eine Schicht bilden, in der die Staubkonzentration wesentlich höher ist als die Dichte des Staubes, der im Gas schwebt, welches vom ersten zum zweiten Filter strömt. Der vom zweiten Filter ausgeschiedene Staub ermöglicht jedoch normalerweise keine Explosion, solange er am Filter haftet.

Eventuell kann man vorsehen, das zweite Filter oder Teile von diesem intermittierend von anhaftendem Staub zu befreien, während Gas durch den Behälter und vom ersten zum zweiten Filter strömt.

Der Erfindungsgegenstand wird anschliessend anhand in der Zeichnung dargestellter Einrichtungen näher erläutert. In der Zeichnung zeigt
die Fig. 1 eine schematisch, teils im Schnitt, teils in Ansicht gezeichnete Einrichtung mit einem einen Siebboden aufweisenden Gut- und/oder Wirbelschicht-Behälter und
die Fig. 2 einen Schnitt durch einen Teil eines Gut-Behälters, der anstelle eines Siebbodens einen Rotor aufweist.

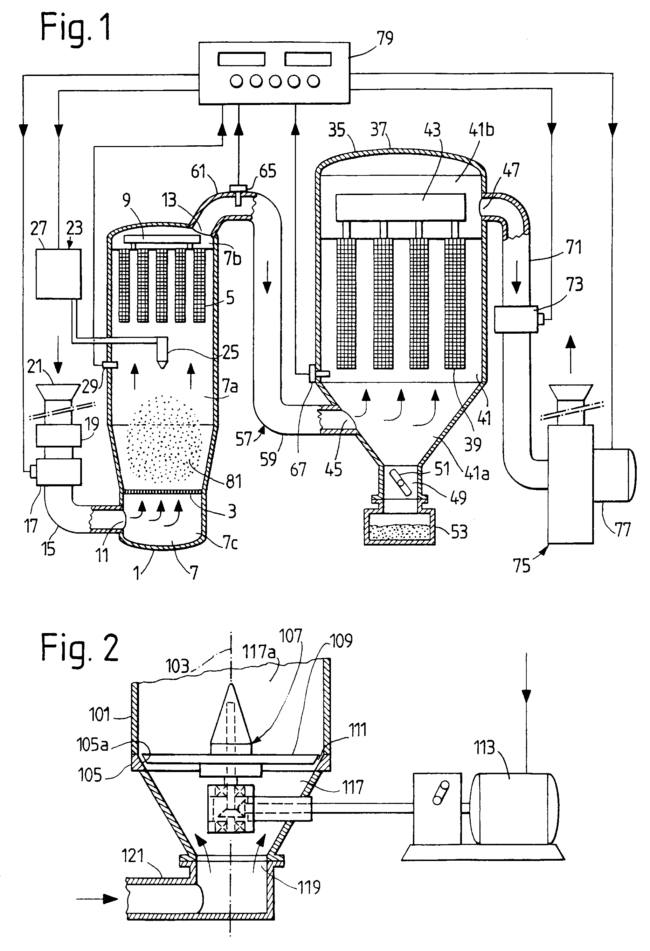

Die in der Fig. 1 dargestellte, zum Bewegen - nämlich Verwirbeln - und Behandeln eines teilchenförmigen Gutes dienende Einrichtung besitzt einen Gut- und/oder Wirbelschicht-Behälter 1, der im allgemeinen rotationssymmetrisch zu einer vertikalen Achse ist. Im unteren Teil des Behälters 1 ist ein gasdurchlässiger Siebboden 3 angeordnet. Im oberen Teil des Behälters 1 ist ein erstes Filter 5 angeordnet. Obschon der Behälter 1 schematisch mit einer zusammenhängenden Wandung gezeichnet ist, besteht er in Wirklichkeit aus mehreren, lösbar miteinander verbundenen Teilen, so dass man den Siebboden und das erste Filter 5 mit relativ geringem Arbeitsaufwand aus dem Behälter 1 herausnehmen kann. Der Behälter begrenzt einen allseitig dicht gegen die Umgebung abgeschlossenen Innenraum 7. Dieser hat einen sich zwischen dem Siebboden 3 und dem ersten Filter befindenden ersten, unteren Innenraumbereich 7a und einen sich zwischen dem oberen Ende der Behälterwandung sowie dem Filter 5 befindenden, zweiten, oberen Innenraumbereich 7b. Ferner ist zwischen dem unteren Ende der Wandung und dem Siebboden noch ein GasverteilungsInnenraumbereich 7c vorhanden.

Das erste Filter 5 weist einen Halter und ein von diesem gehaltenes, Zotten besitzendes Filtergewebe auf. Ferner kann eventuell noch eine Rüttelvorrichtung 9 vorhanden sein, mit der das erste Filter 5 gerüttelt werden kann. Das erste Filter 5 kann jedoch auch zwei oder eventuell mehr separat rüttelbare Filterteile mit je einem Halterteil und einem von diesem gehaltenen Filtergewebe aufweisen.

Der Behälter 1 ist in der Nähe seines unteren Endes mit einem Gaseinlass 11 versehen, der in den GasverteilungsInnenraumbereich 7c mündet. Am oberen Ende des Behälters ist ein Gasauslass 13 vorhanden, der in den zweiten, oberen Innenraumbereich 7b mündet.

Der Gaseinlass ist mit einer Gaszuleitung 15 verbunden, die den Gaseinlass 11 über eine Schnellschluss-Absperrorgan 17 und ein Zuluft-Filter 19 mit einem in die Umgebung mündenden Lufteinlass 21 verbindet.

Ferner kann noch eine Sprühvorrichtung 23 mit mindestens einer im Innenraumbereich 7a angeordneten Sprühdüse 25 und einer mit dieser verbundenen Sprühmaterial-Zufuhrvorrichtung 27 vorhanden sein.

Des weiteren ist mindestens ein Explosionsdetektor 29 vorhanden. Dieser besitzt zum Beispiel einen in den ersten Innenraumbereich 7a hineinragenden Messfühler zum Messen des Drucks und/oder zum Feststellen einer Flamme.

Ein Nachentstauber 35 besitzt ein im allgemeinen zu einer vertikalen Achse rotationssymmetrisches Gehäuse 37, das ein zweites Filter 39 enthält. Dieses besitzt zum Beispiel einige Filterpatronen, könnte jedoch ebenfalls einen Halter und ein von diesem gehaltenes Filtergewebe mit Zotten aufweisen. Das zweite Filter 39 hat Gasdurchlassöffnungen, deren Weite zweckmässigerweise höchstens gleich der Weite der Gasdurchlassöffnungen des ersten Filters und vorzugsweise kleiner als die letztgenannte Weite ist. Das Gehäuse 37 umschliesst einen Innenraum 41, der durch das zweite Filter 39 in einen ersten, unteren Innenraumbereich 41a und einen zweiten, oberen Innenraumbereich 41b unterteilt ist.

Ferner kann eine Staubentfernungs-Vorrichtung 43 vorhanden sein, um von Zeit zu Zeit abwechselnd zum zweiten Filter 39 gehörende Filterteile oder das ganze zweite Filter gleichzeitig von dem an diesem haftenden Staub zu befreien. Die Staubentfernungs-Vorrichtung 43 kann zum Beispiel ausgebildet sein, um die genannten Filterteile des zweiten Filters oder das ganze zweite Filter zu rütteln oder um den Staub von den Filterteilen bzw. dem ganzen Filter mit Druckluft wegzublasen.

Das Gehäuse 37 hat einen in den ersten Innenraumbereich 41a mündenden Gaseinlass 45 und einen in den zweiten Innenraumbereich 41b mündenden Gaseinlass 47. Am unteren Ende des Gehäuses 37 ist ein Staubauslass 49 vorhanden, der mit einem Verschlussorgan 51 verschliessbar ist. Beim unteren Ende des Staubauslasses 41 ist ein Staubsammler 53 lösbar am Gehäuse 37 befestigt.

Der Gasauslass 13 des Behälters 1 ist durch Verbindungsmittel 57, die eine Rohr-Leitung 59 und zum Beispiel noch nicht gezeichnete Muffen und dergleichen aufweisen, mit dem Gaseinlass 45 des Nachentstaubers 35 verbunden. Die Verbindungsmittel 57 begrenzen einen Durchgang und/oder Verbindungsmittel-Innenraumbereich 61, der den zweiten Innenraumbereich 7b des Behälters 1 mit dem ersten Innenraumbereich 41a des Nachentstaubers 35 verbindet.

Die Einrichtung besitzt mindestens einen Staubkonzentrations-Messfühler, um die Staubkonzentration des beim Betrieb vom ersten Filter 9 zum zweiten Filter 39 strömenden Gases zu messen. Die Einrichtung kann zum Beispiel einen im Durchgang-und/oder Verbindungsmittel-Innenraumbereich 61 angeordneten Staubkonzentrations-Messfühler 65 und einen im ersten Innenraumbereich 41a des Nachentstaubers 35 angeordneten Staubkonzentrations-Messfühler 67 aufweisen. Jeder Messfühler 65, 67 kann zum Beispiel optoelektronische Elemente - nämlich eine Leuchtdiode und eine Fotodiode - aufweisen, um die Abschwächung von Licht zu messen das Staub enthaltendes Gas durchdringt. Jeder Messfühler 65, 67 kann ferner elektronische Schaltungsmittel aufweisen oder mit elektronischen Schaltungsmitteln verbunden sein, die aus der Lichtabschwächung die Staubkonzentration ermitteln können.

Der Gasauslass 47 des Nachentstaubers 35 ist durch eine Rohr-Leitung 71 und ein Schnellschluss-Absperrorgan 73 mit dem Einlass eines Gebläses 75 verbunden. Diese weist ein Flügelrad und eine zu dessen Antrieb dienende Antriebsvorrichtung 77 mit einem Elektromotor auf. Der Auslass des Gebläses 75 mündet über eine Abluft-Leitung oder direkt in die Umgebung.

Die beiden Schnellschluss-Absperrorgane 17 und 73 besitzen zum Beispiel einen Schieber oder eventuell ein Ventil, eine pneumatische Stellvorrichtung zum Verschieben des Schiebers bzw. Ventils und ein elektrisch steuerbares Steuer-Ventil, über das die Stellvorrichtung mit einer Druckluftquelle verbunden ist.

Ferner ist eine Steuervorrichtung 79 vorhanden, die durch elektrische Leitungen und/oder Pneumatik-Leitungen mit den Schnellschluss-Absperrorganen 17 sowie 73, der Sprühvorrichtung 23, dem Explosionsdetektor 29, den Staubkonzentrations-Messfühlern 65, 67 und der Antriebsvorrichtung 77 verbunden ist. Die Steuervorrichtung 79 besitzt elektrische, elektronische und eventuell pneumatische Schaltungsmittel, manuell betätigbare Bedienungselemente, Anzeigegeräte und dergleichen. Die Steuervorrichtung besitzt insbesondere auch mindestens ein Bedienungselement, um einen Ausschalt-Grenzwert für die Staubkonzentration einzustellen. Die Steuervorrichtung besitzt des weiteren elektronische Schaltungsmittel, um die Antriebsvorrichtung 77 des Gebläses 75 auszuschalten, wenn die von einem der Staubkonzentrations-Messfühler 65, 67 gemessene Staubkonzentration mindestens gleich dem eingestellten Ausschalt-Grenzwert ist.

Für die Benutzung der Einrichtung kann eine Charge eines teilchenförmiges Gut 81, das beispielsweise aus Nutz-Staubteilchen besteht, in den ersten, unteren Innenraumbereich 7a des Behälters 1 eingebracht und dieser dicht verschlossen werden. Danach kann mittels der Steuervorrichtung 79 das Gebläse 75 eingeschaltet werden, so dass dieses Gas, d.h. Luft aus der Umgebung durch die Gaszuleitung 15, den Behälter 1, die Verbindungsmittel 57 und den Nachentstauber 35 hindurchsaugt und wieder in die Umgebung fördert. Die Luft strömt dabei im Behälter 1 von unten nach oben durch den Siebboden 3 und den ersten, unteren Innenraumbereich 7a, wobei sie das teilchenförmige Gut verwirbelt.

Wenn das teilchenförmige Gut lediglich getrocknet werden soll, wird die Sprühvorrichtung 23 beim Verwirbeln des Gutes nicht benutzt. Falls die Teilchen des Gutes granuliert oder mit Überzügen versehen werden sollen, kann mit der Sprühvorrichtung 23 im ersten Innenraumbereich 7a noch ein flüssiges und/oder ein teilchenförmiges Sprühmaterial zersprüht und auf die Teilchen des Gutes aufgesprüht werden. Danach können die Teilchen getrocknet werden. Es ist darauf zu achten, dass das Sprühmaterial entweder nicht brennbar oder aber in der Menge so begrenzt ist, dass mit Sicherheit kein explosionsfähiges Sprühmaterial/Luft-Gemisch entstehen kann.

Aus dem ersten Innenraumbereich 7a strömt die Luft durch das erste Filter 5 in den zweiten, oberen Innenraumbereich 7b. Wenn das erste Filter 5 keine Schäden aufweist, scheidet es den in der Luft vorhandenen Staub vollständig oder mindestens annähernd vollständig aus. Die Luft strömt dann durch die Verbindungsmittel 57 in den ersten Innenraumbereich 41a des Nachentstaubers 35 und von dort in den zweiten Innenraumbereich 41b des Nachentstaubers 35. Das zweite Filter 39 scheidet dabei allenfalls noch in der Luft vorhandenen Staub aus dieser aus. Danach gelangt die nun praktisch vollkommen staubfreie Luft durch die Leitung 71 über das Gebläse 75 wieder in die Umgebung.

Nötigenfalls kann die Staubentfernungs-Vorrichtung 43 von Zeit zu Zeit abwechselnd verschiedene Filterteile des zweiten Filters 35 oder gleichzeitig das ganze zweite Filter 35 durch Rütteln oder Ausblasen von anhaftenden Staub befreien, während Luft durch den Behälter 1 und den Nachentstauber 35 strömt. Der vom zweiten Filter gelöste Staub kann dann durch den ersten Innenraumbereich und den Staubauslass 49 in den Staubsammler 53 gelangen. Die Entfernung von Staub vom zweiten Filter soll dabei vorzugsweise derart erfolgen, dass die Staubkonzentration in der durch den Nachentstauber strömenden Luft trotz des vom Filter herabsinkenden Staubes unter dem eingestellten Grenzwert bleibt.

Die Staubkonzentrations-Messfühler 65, 67 messen beim Betrieb der Einrichtung dauernd die Staubkonzentration des Staubes, der in der vom ersten Filter zum zweiten Filter strömenden Luft vorhanden ist. Falls die Staubkonzentration zum Beispiel wegen eines Risses im ersten Filter 5 den eingestellten Abschalt-Grenzwert erreicht oder überschreitet, schaltet die Steuervorrichtung 79 das Abluftgebläse 75 aus. Falls die Sprühvorrichtung 23 in diesem Zeitpunkt in Betrieb ist, wird sie durch die Steuervorrichtung 79 ebenfalls ausgeschaltet.

Wenn während des Betriebs der Einrichtung irgendwann im ersten Innenraumbereich 7a des Behälters 1 eine Explosion ausgelöst wird, ist also die Staubkonzentration in dem vom ersten zum zweiten Filter strömenden Gas vor und bei der Auslösung der Explosion kleiner als der vorgegebene Staubkonzentrations-Grenzwert. Wie in der Einleitung erörtert, erzeugt die Explosion dann Drücke, die wesentlich kleiner sind, als wenn die Staubkonzentration in dem vom ersten zum zweiten Filter strömenden Gas bei der Auslösung die untere Explosionsgrenze übersteigt.

Falls eine Explosion stattfindet, wird diese durch den Explosionsdetektor 29 festgestellt. Die Steuervorrichtung schliesst dann die beiden Schnellschluss-Absperrorgane 17 und 73, so dass nur während der sehr kurzen Schliesszeit im ms-Bereich nur geringe Mengen an teilchenförmigem Gut bzw. Staub, aber mit Sicherheit keine Flamme in die Umgebung gelangt.

Die zum Teil in der Fig. 2 ersichtliche Einrichtung besitzt einen Gut-Behälter 101 mit einer vertikalen Achse 103 und einem Ring 105. Dieser bildet einen zur Achse 103 rotationssymmetrischen Innenflächenabschnitt 105a der Innenfläche des Behälters. In diesem ist ein um die Achse 103 drehbarer und höhenverstellbarer Rotor 107 mit einer Scheibe 109 vorhanden. Der Rotor wird beim Betrieb der Einrichtung mit einer Stellvorrichtung in eine Stellung gebracht, in der er zusammen mit dem Innenflächenabschnitt 105a einen Ringspalt 111 begrenzt. Eine zum Drehen des Rotors dienende Antriebsvorrichtung 113 besitzt einen elektrischen Motor, der durch eine elektrische Leitung mit der nicht gezeichneten Steuervorrichtung verbunden ist. Der Rotor 107 ersetzt den Siebboden 3 der in der Fig. 1 gezeichneten Einrichtung und begrenzt das untere Ende des ersten, unteren Innenraumbereichs 117a des Innenraums 117 des Behälters 101. Dieser hat an seinem unteren Ende einen Gaseinlass 119, an den eine Gaszuleitung 121 angeschlossen ist. Soweit vorgängig nichts anderes geschrieben wurde, kann die in der Fig. 2 ersichtliche Einrichtung ähnlich ausgebildet sein wie die Einrichtung gemäss der Fig. 1.

Wenn die Einrichtung mit den in der Fig. 2 ersichtlichen Teilen nicht in Betrieb ist, kann die Scheibe 109 des Rotors 107 mit ihrer konischen Aussenfläche auf dem konischen Innenflächenabschnitt 105a aufliegen. Für die Verwendung der Einrichtung kann man eine Charge eines teilchenförmigen Gutes in den ersten Innenraumbereich 117a einbringen. Danach wird der Rotor 107 in die in der Fig. 2 gezeichnete Stellung angehoben und mit der Antriebsvorrichtung 113 gedreht. Ferner wird mit einem dem Gebläse 75 entsprechenden Gebläse ein Gas - nämlich Luft - von unten durch den Ringspalt 111 in den ersten, unteren Innenraumbereich 117a und durch diesen nach oben durch das nicht ersichtliche erste Filter hindurch in einen zweiten, oberen Innenraumbereich des Behälters 101 und danach zu einem Nachentstauber und durch diesen hindurch gesaugt. Die Teilchen des sich im ersten Innenraumbereich 117a befindenden Gutes liegen zeitweise auf der Scheibe 109 des rotierenden Rotors 107 und werden dabei durch den Rotor 107 von der Achse 103 weg nach aussen bewegt Wenn die Teilchen in die Nähe des Ringspaltes 111 gelangen, werden sie durch die Luft angehoben und mehr oder weniger verwirbelt und fallen dann wieder auf die Scheibe des Rotors zurück. Die Teilchen des Gutes können während dieser Bewegung zum Beispiel getrocknet oder zum Beispiel zuerst mittels einer nicht gezeichneten Sprühvorrichtung mit einem flüssigen Sprühmaterial besprüht und dann getrocknet werden. Stattdessen können die Teilchen des Gutes zum Beispiel gleichzeitig mit einem flüssigen Sprühmaterial und mit einem aus kleinen festen Teilchen bestehenden, staubartigen Sprühmaterial besprüht und dadurch beschichtet werden, wie es aus der EP-A-0 505 319 bekannt ist.

Beim Bewegen und Behandeln der Teilchen wird analog wie bei der in der Fig. 1 gezeichneten Einrichtung mit mindestens einem Staubkonzentrations-Messfühler die Staubkonzentration in dem vom ersten Filter zum zweiten Filter strömenden Gas gemessen. Falls die Staubkonzentration mindestens gleich dem vorgesehenen Grenzwert ist, schaltet die Steuervorrichtung das Gebläse, die den Rotor antreibende Antriebsvorrichtung 113 und - falls eine Sprühvorrichtung vorhanden sowie in Betrieb ist - auch diese aus.

Die Einrichtungen und Verfahren können noch in anderer Hinsicht geändert werden. Zum Beispiel kann man eventuell einen der Staubkonzentrations-Messfühler 65, 67 weglassen oder anstelle von diesem einen im zweiten Innenraumbereich des Gut-Behälters angeordnete Messfühler vorsehen. Man könnte jedoch auch zusätzliche Staubkonzentrations-Messfühler vorsehen und beispielsweise die Staubkonzentration gleichzeitig im ersten Innenraumbereich 7b des Behälters 1 bzw. 101 in der Leitung 59 und im Nachentstauber messen. Ferner kann man die Staubkonzentration gleichzeitig an verschiedenen Stellen des Nachentstaubers messen.

Ferner könnte der zweite Innenraumbereich 7b des Behälters 1 in zwei Kammern unterteilt sein, denen je ein Filterteil des ersten Filters zugeordnet ist. Jede dieser Kammern könnte dann einen eigenen Gasauslass haben. Die beiden Gasauslässe könnten dann durch zwei Rohr-Leitungen aufweisende Verbindungsmittel mit dem Nachentstauber verbunden sein. In einem solchen Fall könnte man eventuell in jeder dieser Rohr-Leitungen einen Staubkonzentrations-Messfühler anordnen.

Des weitern könnte die Einrichtung Teile zur Bildung eines geschlossenen Kreislaufs für Luft oder eventuell ein anderes Gas aufweisen. Der Auslass des Gebläses würde dann nicht in die Umgebung münden, sondern mit dem Gaseinlass des Gut- und/oder Wirbelschicht-Behälters verbunden sein.

## Patentansprüche

1. Verfahren zum Bewegen, insbesondere Verwirbeln, eines teilchenförmigen Gutes (81), das brennbaren Staub aufweist oder bei dessen Bewegung brennbarer Staub entstehen kann, mit einer Einrichtung, die einen Behälter (1, 101), ein in diesem angeordnetes, erstes Filter (5), einen Nachentstauber (35) mit einem zweiten Filter (39) und ein Gebläse (75) aufweist, wobei das erste Filter (5) im Behälter (1) einen ersten Innenraumbereich (7a, 117a) gegen einen zweiten, mit dem Nachentstauber (35) verbundenen Innenraumbereich (7b) abgrenzt und wobei das Gut (81) in den ersten Innenraumbereich (7a, 117a) eingebracht und mit dem Gebläse (75) Gas durch den ersten Innenraumbereich (7a, 117a) sowie durch das in diesem vorhandenes Gut (81) und das erste Filter (5) hindurch in den zweiten Innenraumbereich (7b), von diesem zum Nachentstauber (35) und durch das zweite Filter (39) hindurch gefördert wird, dadurch gekennzeichnet, dass die Staubkonzentration in vom ersten Filter (5) zum zweiten Filter (39) strömenden Gas gemessen und das Gebläse (75) automatisch ausgeschaltet wird, wenn die Staubkonzentration mindestens gleich einem Grenzwert ist.

2. Verfahren nach Anspruch 1, dadurch gekennzeichnet, dass der Grenzwert der Staubkonzentration kleiner ist als eine kritische Staubkonzentration, bei deren Erreichen oder Überschreiten ein Gemisch von Staub und sauerstoffhaltigem Gas explodieren kann, wobei der Grenzwert der Staubkonzentration zum Beispiel höchstens 30 g/m³ beträgt.

3. Verfahren nach Anspruch 1 oder 2, dadurch gekennzeichnet, dass das zweite Filter (39) oder Teile von diesem während des Hindurchleitens von Gas durch den Behälter (1, 101) derart von allenfalls anhaftendem Staub befreit wird bzw. werden, dass die Konzentration von Staub, der im zum zweiten Filter (39) strömenden Gas schwebt, beim Befreien des zweiten Filters (39) von Staub kleiner als der Grenzwert der Staubkonzentration ist.

4. Verfahren nach einem der Ansprüche 1 bis 3, dadurch gekennzeichnet, dass das Gas Luft besteht.

5. Einrichtung zum Bewegen, insbesondere Verwirbeln, eines teilchenförmigen Gutes (81), das brennbaren Staub aufweist oder bei dessen Bewegung brennbarer Staub entstehen kann, mit einem Behälter (1, 101), einem in diesem angeordneten, ersten Filter (5), das einen zum Aufnehmen des Gutes (81) dienenden, ersten Innenraumbereich (7a, 117a) des Behälters (1, 101) gegen einen zweiten Innenraumbereich (7b) des Behälters (1, 101) abgrenzt, einem mit dem zweiten Innenraumbereich (107b) verbundenen, ein zweites Filter (39) aufweisenden Nachentstauber (35) und ein durch eine Steuervorrichtung (79) steuerbares Gebläse (75), um Gas durch den ersten Innenraumbereich (7a, 117a) sowie durch das erste Filter (5) hindurch in den zweiten Innenraumbereich (7b), von diesem zum Nachentstauber (35) und durch das zweite Filter (39) hindurch zu fördern, dadurch gekennzeichnet, dass mindestens ein Staubkonzentrations-Messfühler (65, 67) zum Messen der Staubkonzentration im vom ersten Filter (5) zum zweiten Filter (39) strömenden Gas vorhanden ist, dass der bzw. jeder Staubkonzentrations-Messfühler (65, 67) mit der Steuervorrichtung (79) verbunden ist und dass die letztere Mittel aufweist, um das Gebläse (75) auszuschalten, wenn die Staubkonzentration mindestens gleich einem Grenzwert ist.

6. Einrichtung nach Anspruch 5, dadurch gekennzeichnet, dass der Staubkonzentrations-Messfühler (65, 67) optoelektronische Elemente aufweist um die Abschwächung von Licht zu ermitteln, das Staub enthaltendes Gas durchdringt.

7. Einrichtung nach einem der Ansprüche 5 oder 6, dadurch gekennzeichnet, dass mindestens eine durch die Steuervorrichtung (79) steuerbare Sprühvorrichtung (23) vorhanden ist, um ein Sprühmaterial im ersten Innenraumbereich (7a, 107a) zu zersprühen, und dass die Steuervorrichtung (79) ausgebildet ist, um die Sprühvorrichtung (23) ebenfalls auszuschalten, wenn die Staubkonzentration mindestens gleich dem Grenzwert ist.

8. Einrichtung nach einem der Ansprüche 5 bis 7, dadurch gekennzeichnet, dass der Behälter (101) einen ringförmigen, zu einer vertikalen Achse (103) rotationssymmetrischen Innenflächenabschnitt (105a) hat, dass im Behälter (101) ein um die Achse (103) drehbarer, den ersten Innenraumbereich (117a) an dessen unterem Ende begrenzender Rotor (107) vorhanden ist, der mindestens beim Betrieb zusammen mit dem ringförmigen Innenflächenabschnitt (105a) einen Ringspalt (111) begrenzt, durch den Gas in den ersten Innenraumbereich (117a) einströmen kann, dass der Rotor (107) durch die Steuervorrichtung (79) steuerbar drehbar ist und dass die Steuervorrichtung (79) ausgebildet ist, um den Rotor (107) ebenfalls auszuschalten, wenn die Staubkonzentration mindestens gleich dem Grenzwert ist.

9. Einrichtung nach einem der Ansprüche 5 bis 8, dadurch gekennzeichnet, dass der Nachentstauber (35) ein Gehäuse (37) aufweist, welches das zweite Filter (39) und einen an dieses angrenzenden Innenraumbereich (41a) enthält, dass Verbindungsmittel (57) vorhanden sind und den zweiten Innenraumbereich (7b) des Behälters (1, 101) mit dem genannten Innenraumbereich (41a) des Nachentstaubers (35) verbinden und der Behälter (1, 101), die Verbindungsmittel (57) und das Gehäuse (37) des Nachentstaubers (35) bis zu einem Druck explosionsdruckstossfest oder explosionsdruckfest sind, der 100 kPa bis 500 kPa und beispielsweise 150 kPa bis 300 kPa grösser ist als der Luftdruck in der Umgebung.

10. Einrichtung nach einem der Ansprüche 5 bis 9, dadurch gekennzeichnet, dass der Behälter (1, 101) einen Gaseinlass (11, 119) aufweist, um als Gas ein sauerstoffhaltiges Gas, beispielsweise Luft, in den ersten Innenraumbereich (7a, 117a) einzuleiten.

## Claims

1. Process for moving, in particular fluidizing, a particulate material (81) which contains flammable dust or during the movement of which flammable dust can form, by means of an apparatus which has a container (1, 101), a first filter (5) arranged therein, a downstream dust separator (35) with a second filter (39) and a fan (75), the first filter (5) separating in the container (1) a first interior region (7a, 117a) from a second interior region (7b) connected to the downstream dust separator (35), and the material (81) being introduced into the first interior (7a, 117a) region and gas being transported by the fan (75) through the first interior region (7a, 117a) and through the material (81) present therein and the first filter (5) into the second interior region (7b), from there to the downstream dust separator (35) and through the second filter (39), characterized in that the dust concentration in gas flowing from the first filter (5) to the second filter (39) is measured and the fan (75) is automatically switched off if the dust concentration is at least equal to a limit.

2. Process according to Claim 1, characterized in that the limit of the dust concentration is lower than a critical dust concentration at which or above which a mixture of dust and oxygen-containing gas can explode, the limit of the dust concentration being, for example, at most 30 g/m³.

3. Process according to Claim 1 or 2, characterized in that, during passage of gas through the container (1, 101), the second filter (39) or parts thereof is or are freed from any adhering dust in such a way that the concentration of dust which is suspended in gas flowing to the second filter (39) during freeing of the second filter (39) from dust is lower than the limit of the dust concentration.

4. Process according to any of Claims 1 to 3, characterized in that the gas consists of air.

5. Apparatus for moving, in particular fluidizing, a particulate material (81) which contains flammable dust or during the movement of which flammable dust can form, having a container (1, 101), a first filter (5) which is arranged therein and separates a first interior region (7a, 117a) of the container (1, 101), which region serves for receiving the material (81), from a second interior region (7b) of the container (1, 101), a downstream dust separator (35) which is connected to the second interior region (107b) and has a second filter (39) and a fan (75) which is controllable by a control device (79), for transporting gas through the first interior region (7a, 117a) and through the first filter (5) into the second interior region (7b), from there to the downstream dust separator (35) and through the second filter (39), characterized in that at least one dust concentration sensor (65, 67) for measuring the dust concentration in the gas flowing from the first filter (5) to the second filter (39) is present, in that the or each dust concentration sensor (65, 67) is connected to the control device (79) and that the latter has means for switching off the fan (75) if the dust concentration is at least equal to a limit.

6. Apparatus according to Claim 5, characterized in that the dust concentration sensor (65, 67) has optoelectronic members for determining the attenuation of light which passes through dust-containing gas.

7. Apparatus according to Claim 5 or 6, characterized in that at least one spray device (23) controllable by the control device is present for atomizing a spray material in the first interior region (7a, 107a), and that the control device (79) is formed in order also to switch off the spray device (23) if the dust concentration is at least equal to the limit.

8. Apparatus according to any of Claims 5 to 7, characterized in that the container (101) has an annular inner surface section (105a) rotationally symmetrical with respect to a vertical axis (103), that a rotor (107) which is rotatable about the axis (103), bounds the first interior region (117a) at its lower end and, at least during operation, together with the annular inner surface section (105a), bounds an annular gap (111) through which gas can flow into the first interior region (117a) is present in the container (101), that the rotor (107) can be rotated under control by the control device (79) and that the control device (79) is formed in order also to switch off the rotor (107) if the dust concentration is at least equal to the limit.

9. Apparatus according to any of Claims 5 to 8, characterized in that the downstream dust separator (35) has a housing (37) which contains the second filter (39) and an interior region (41a) adjacent to said filter and that connecting means (57) are present and connect the second interior region (7b) of the container (1, 101) to the stated interior region (41a) of the downstream dust separator (35) and the container (1, 101), the connecting means (57) and the housing (37) of the downstream dust separator (35) are resistant to explosion pressure surges or resistant to explosion pressure to a pressure which is 100 kPa to 500 kPa and, for example, 150 kPa to 300 kPa greater than the air pressure in the environment.

10. Apparatus according to any of Claims 5 to 9, characterized in that the container (1, 101) has a gas inlet (11, 119) for passing, as gas, an oxygen-containing gas, for example air, into the first interior region (7a, 117a).

## Revendications

1. Procédé pour mettre en mouvement, et en particulier en lit fluidisé, un produit (81) en particules qui présente une poussière combustible ou qui peut donner lieu à l'apparition d'une poussière combustible lors de son mouvement, à l'aide d'un dispositif qui présente une cuve (1, 101), un premier filtre (5) disposé dans cette dernière, un dépoussiéreur aval (35) comportant un deuxième filtre (39) et un ventilateur (75), le premier filtre (5) séparant dans la cuve (1) une première zone (7a, 117a) de l'enceinte intérieure d'une deuxième zone (7b) de l'enceinte intérieure reliée au dépoussiéreur aval (35), et le produit (81) étant introduit dans la première zone (7a, 117a) de l'enceinte intérieure et du gaz étant transporté par le ventilateur (75) à travers la première zone (7a, 117a) de l'enceinte intérieure ainsi qu'à travers le produit (81) présent dans cette dernière et à travers le premier filtre (5), pour pénétrer dans la deuxième zone (7b) de l'enceinte intérieure, et de là, être transporté vers le dépoussiéreur aval (35) et à travers le deuxième filtre (39), caractérisé en ce que la concentration en poussière dans le gaz qui s'écoule entre le premier filtre (5) et le deuxième filtre (39) est mesurée, et le ventilateur (75) est automatiquement débranché lorsque la concentration en poussière est au moins égale à une valeur limite.

2. Procédé selon la revendication 1, caractérisé en ce que la valeur limite de la concentration en poussière est inférieure à une concentration critique en poussière qui, lorsqu'elle est atteinte ou dépassée, permet l'explosion d'un mélange de poussière et d'un gaz contenant de l'oxygène, la valeur limite de la concentration en poussière étant par exemple d'au plus 30 g/m³.

3. Procédé selon les revendications 1 ou 2, caractérisé en ce que pendant que le gaz passe à travers la cuve (1, 101), le deuxième filtre (39) ou des parties de ce dernier sont débarrassés des poussières qui y adhèrent en tous les cas, de telle sorte que la concentration en poussière en suspension dans le gaz qui s'écoule vers le deuxième filtre (39) lorsque le deuxième filtre (39) est débarrassé de sa poussière est inférieure à la valeur limite de la concentration en poussière.

4. Procédé selon l'une des revendications 1 à 3, caractérisé en ce que le gaz est constitué d'air.

5. Dispositif pour la mise en mouvement, et en particulier pour la fluidisation, d'un produit (81) en particules qui présente des poussières combustibles ou qui peut donner lieu à l'apparition de poussière combustible pendant son mouvement, comportant une cuve (1, 101), un premier filtre (5) disposé dans cette dernière et séparant une première zone (7a, 117a) de l'enceinte intérieure de la cuve (1, 101), qui servent à recevoir le produit (81) d'une deuxième zone (7b) de l'enceinte intérieure de la cuve (1, 101), et comportant un dépoussiéreur aval (35) relié à la deuxième zone (7b) de l'enceinte intérieure et présentant un deuxième filtre (39), et un ventilateur (75) commandé par un dispositif de commande (79), lequel ventilateur sert à transporter du gaz à travers la première zone (7a, 117a) de l'enceinte intérieure ainsi qu'à travers le premier filtre (5), pour l'amener dans la deuxième zone (7b) de l'enceinte intérieure et de là dans le dépoussiéreur aval (35) et à travers le deuxième filtre (39), caractérisé en ce qu'il présente au moins sonde (65, 67) de mesure de la concentration en poussière, pour mesurer la concentration en poussière dans le gaz qui s'écoule entre le premier filtre (5) et le deuxième filtre (39), en ce que la ou chaque sonde de mesure (65, 67) de la concentration en poussière est reliée au dispositif de commande (79), et en ce que ce dernier présente des moyens permettant de débrancher le ventilateur (75) lorsque la concentration en poussière est au moins égale à une valeur limite.

6. Dispositif selon la revendication 5, caractérisé en ce que la sonde (65, 67) de mesure de la concentration en poussière présente des éléments optoélectronique pour déterminer l'affaiblissement de la lumière qui traverse le gaz contenant des poussières.

7. Dispositif selon l'une des revendications 5 ou 6, caractérisé en ce qu'il présente au moins un dispositif de pulvérisation (23) commandé par le dispositif de commande (79), pour pulvériser un matériau de pulvérisation dans la première zone (7a, 117a) de l'enceinte intérieure, et en ce que le dispositif de commande (79) est configuré de manière à également débrancher le dispositif de pulvérisation (23) lorsque la concentration en poussière est au moins égale à la valeur limite.

8. Dispositif selon l'une des revendications 5 à 7, caractérisé en ce que la cuve (101) présente une partie annulaire (105a) de surface intérieure à symétrie de rotation par rapport à un axe vertical (103), en ce que dans la cuve (101) est prévu un rotor (107) pouvant tourner autour de l'axe (103) et délimitant l'extrémité inférieure de la première zone (117a) de l'enceinte intérieure, lequel rotor délimite, au moins en fonctionnement, un interstice annulaire (111) avec la partie annulaire (105a) de la surface intérieure, interstice annulaire par lequel le gaz peut pénétrer dans la première zone (117a) de l'enceinte intérieure, en ce que le rotor (107) peut être entraîné en rotation sous la commande du dispositif de commande (79) et en ce que le dispositif de commande (79) est configuré de manière à également débrancher le rotor (107) lorsque la concentration en poussière est au moins égale à la valeur limite.

9. Dispositif selon l'une des revendications 5 à 8, caractérisé en ce que le dépoussiéreur aval (35) présente un caisson (37) qui contient le deuxième filtre (39) et une zone (41a) d'enceinte intérieure contiguë à ce deuxième filtre, en ce que des moyens de liaison (57) sont prévus pour relier la deuxième zone (7b) de l'enceinte intérieure de la cuve (1, 101) à ladite zone (41a) de l'enceinte intérieure du dépoussiéreur aval (35), et en ce que la cuve (1, 101), les moyens de liaison (57) et le caisson (37) du dépoussiéreur aval (35) résistent à la pression d'une explosion ou à l'onde de choc d'une explosion jusqu'à une pression qui est supérieure de 100 kPa à 500 kPa, et par exemple de 150 kPa à 300 kPa, à la pression de l'air dans l'environnement.

10. Dispositif selon l'une des revendications de 5 à 9, caractérisé en ce que la cuve (1, 101) présente une entrée de gaz (11, 119) pour introduire comme gaz dans la première zone (7a, 117a) de l'enceinte intérieure un gaz contenant de l'oxygène, par exemple de l'air.
